# EUROPEAN PATENT APPLICATION

(11) **EP 4 845 146 A1**
(43) Date of publication of application: **25.11.2026**
(21) Application number: 24919627.0
(22) Date of filing: 06.06.2024
(51) Int. Cl.: H04N 13/398, G06F 3/048

(54) **3D OBJECT OPERATION METHOD, ELECTRONIC DEVICE, AND COMPUTER-READABLE STORAGE MEDIUM**

(30) Priority: 24.01.2024 CN 202410104598
(71) Applicant: ZTE CORPORATION, Shenzhen, Guangdong 518057 (CN)
(72) Inventor: CHEN, Jianjiang, Shenzhen, Guangdong 518057 (CN); SUN, Xiaofan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/097666
(87) International publication number: WO 2025/156542

(57) **Abstract**

Provided are a 3D object operation method, an electronic device, and a computer-readable storage medium. The method comprises: when a terminal stereoscopically displays screen content, determining the visual depth of the screen content as perceived by human eyes, the visual depth comprising a first depth of field located in front of a screen and a second depth of field located behind the screen (S202); detecting a first position of a user finger in front of the screen (S204); and when the first position is within a first distance range of the screen, operating a 3D object within the first depth of field, and when the first position is within a second distance range of the screen, operating a 3D object within the second depth of field (S206).

## Description

### CROSS-REFERENCE TO RELATED APPLICATIONS

The present application claims priority to the Chinese patent application No. 202410104598.2 filed with the CNIPA on January 24, 2024, and entitled "3D OBJECT OPERATION METHOD, ELECTRONIC DEVICE, AND COMPUTER-READABLE STORAGE MEDIUM", the entire content of which is incorporated herein by reference.

### TECHNICAL FIELD

The present application relates to the technical field of terminal display, in particular to a 3D object operation method, an electronic device, and a computer-readable storage medium.

### BACKGROUND

With the development of a stereoscopic display technology, an increasing number of terminals are capable of using the stereoscopic display technology to stereoscopically display content displayed in a terminal screen. This allows users to perceive a 3D visual effect when viewing the screen content, thereby enhancing the user experience.

The principle by which a terminal uses the stereoscopic display technology to stereoscopically display screen content is as follows: by altering display characteristics of the screen content, the left and right eyes of a user can perceive a certain degree of parallax when viewing the screen content, thereby creating a sense of depth and spatial presence for the screen content, thus achieving a 3D display effect. In the related art, to further enhance the user experience, users are allowed to operate 3D objects displayed stereoscopically, such as moving and rotating these 3D objects. However, in some application scenarios, when the terminal stereoscopically displays the screen content, a visual depth of user eyes with respect to the screen content may include regions both in front of the screen and behind the screen. That is, 3D objects may include those located in front of the screen and those located behind the screen. For 3D objects located in front of the screen, users can directly operate them. However, for 3D objects located behind the screen, as they are visually located behind the screen, users cannot directly operate them.

### SUMMARY

The present application provides a 3D object operation method, an electronic device, and a computer-readable storage medium, in order to solve the problem that, in a scenario where a terminal performs 3D stereoscopic display of screen content, a user cannot operate a 3D object that is visually located behind a terminal screen.

In a first aspect, a 3D object operation method is provided. The method includes: determining, when a terminal stereoscopically displays screen content, a visual depth of human eyes with respect to the screen content, wherein the visual depth includes a first depth region and a second depth region, the first depth region is located in front of a screen, and the second depth region is located behind the screen; detecting a first position of a user finger in front of the screen; and operating a 3D object within the first depth region when the first position is within a first distance range of the screen, and operating a 3D object within the second depth region when the first position is within a second distance range of the screen.

In a second aspect, an electronic device is provided. The electronic device includes: a processor; and a memory configured to store instructions executable by the processor, wherein the processor is configured to execute the instructions to implement the method described in the first aspect.

In a third aspect, a computer-readable storage medium is provided. Instructions in the storage medium, when executed by a processor of an electronic device, cause the electronic device to perform the method described in the first aspect.

### BRIEF DESCRIPTION OF DRAWING(S)

FIG. 1 is a schematic diagram of a terminal stereoscopically displaying screen content in the related art.
FIG. 2 is a schematic flowchart of a 3D object operation method according to an embodiment of the present application.
FIG. 3 is a schematic diagram of determining a target position within a visual depth corresponding to a first position of a user finger based on a position mapping relationship, according to an embodiment of the present application.
FIG. 4 is a schematic diagram of operating a 3D object according to an embodiment of the present application.
FIG. 5 is a schematic diagram of an operable range of a user finger according to an embodiment of the present application.
FIG. 6 is a schematic diagram of providing visual feedback on a 3D object according to an embodiment of the present application.
FIG. 7 is a schematic flowchart of a 3D object operation method according to another embodiment of the present application.
FIG. 8 is a schematic structural diagram of an electronic device according to an embodiment of the present application.
FIG. 9 is a schematic structural diagram of a 3D object operation apparatus according to an embodiment of the present application.

### DETAILED DESCRIPTION

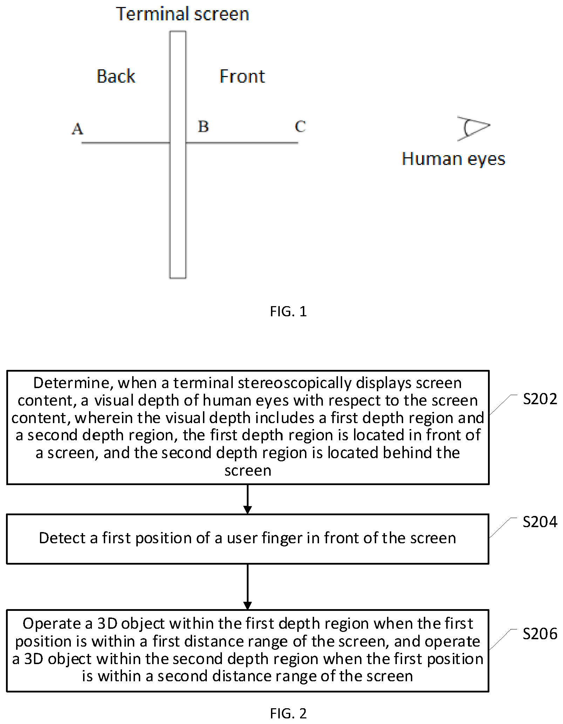

In some application scenarios, when a terminal stereoscopically displays screen content, a visual depth of user eyes with respect to the screen content includes both in front of a screen and behind the screen. Accordingly, 3D objects also include those located in front of the screen and those located behind the screen. As shown in FIG. 1, when the terminal stereoscopically displays the screen content, the visual depth of the user eyes includes a visual depth BC located in front of the screen and a visual depth AB located behind the screen.

When a user operates 3D objects, for 3D objects in front of the screen, the user can directly operate them. However, for 3D objects behind the screen, the user cannot directly operate them. In the related art, approaches such as translation may be adopted to push a 3D object located behind the screen to the front of the screen, and then operations are performed on it. For example, when the user wants to click on a 3D object behind the screen, the 3D object may first be pushed to the front of the screen to be subject to the click operation, and finally be pushed back to behind the screen. However, this operation method is rather cumbersome, and at the same time, it compresses the original layout, which may cause great inconvenience to the user in actual use.

Embodiments of the present application provide a 3D object operation method, an electronic device, and a computer-readable storage medium. In a scenario where a terminal stereoscopically displays screen content and a visual depth of human eyes with respect to the screen content includes a first depth region in front of a screen and a second depth region behind the screen, an area in front of the terminal screen may be divided into a first distance range and a second distance range. When a position of a user finger in front of the screen is within the first distance range, a 3D object within the first depth region may be operated; and when the position of the user finger in front of the screen is within the second distance range, a 3D object within the second depth region may be operated. In this way, by mapping the first depth region visually located in front of the screen and the second depth region visually located behind the screen to the first distance range and the second distance range in front of the screen, respectively, operations on 3D objects both in front of and behind the screen can be achieved.

In order to make those skilled in the art better understand the technical solutions in the present application, the technical solutions in the present application will be described clearly and completely below with reference to the accompanying drawings in one or more embodiments of the present application. Apparently, the described embodiments are only part of the embodiments of the present application, rather than all of the embodiments. Based on the embodiments in the present application, all other embodiments obtained by those of ordinary skill in the art without creative efforts shall fall within the scope of protection of the present application.

The terms "first," "second" and so on involved in the present application and the claims are intended to distinguish similar objects, and are not used for describing a specific order or sequence. It should be understood that such used data is interchangeable where appropriate so that the present application can be implemented in an order other than those illustrated or described here. In addition, "and/or" involved in the present application and the claims represents at least one of connected objects, and the character "/" generally indicates an "or" relationship between associated objects before and after it.

It should be noted that the technical solutions provided in the embodiments of the present application may be applied to both autostereoscopic 3D scenarios and non-autostereoscopic 3D scenarios, which is not limited here. The terminal in the embodiments of the present application may be a terminal with stereoscopic display functionality. In some implementations, the terminal may include, but is not limited to, a 3D interface display apparatus, a camera system apparatus (single camera or dual camera), a touch detection system, a gyroscope sensor, a gravity acceleration sensor, a microprocessor, a baseband module, a wireless transceiver module, a power module, a terminal operating system, and a user operation instruction monitoring system. In the technical solutions provided by the embodiments of the present application, the 3D interface display apparatus may be used to present a 3D display effect. In autostereoscopic 3D scenarios, the 3D display apparatus may include an autostereoscopic 3D tablet display screen. The terminal operating system may be used to present a 3D interface on the 3D interface display apparatus, perform interface switching and navigation upon receiving user operations, carry out data processing tasks, etc. The terminal operating system may include an application layer, a framework layer, and a kernel layer. The user operation instruction monitoring system may be used to acquire image information from a camera, analyze and detect user gestures and/or facial information, determine hand motions, finger positions, eye gaze positions, lip movements, facial expressions, etc. of users, and map them to corresponding preset interface operation instructions. The camera apparatus may be used to detect gesture dynamics and the depth of gesture positions, i.e., to determine the positional distance between the finger or palm and the camera. The instructions parsed by the user operation instruction monitoring system may be transmitted to the terminal operating system, and the terminal operating performs interface operations based on the instructions.

When the terminal stereoscopically displays the screen content, displayed 3D objects may be virtual images, etc., which is not limited here.

The technical solutions provided by the embodiments of the present application are described in detail below in combination with the accompanying drawings.

FIG. 2 is a schematic flowchart of a 3D object operation method according to one embodiment of the present application. The embodiment shown in FIG. 2 includes the following steps.

In S202, when a terminal stereoscopically displays screen content, a visual depth of human eyes with respect to the screen content is determined. The visual depth includes a first depth region and a second depth region. The first depth region is located in front of a screen, and the second depth region is located behind the screen.

When the terminal receives an instruction for stereoscopically displaying the screen content or is in a scenario where stereoscopic display of the screen content is required, the terminal may use a stereoscopic display technology to stereoscopically display the screen content. The implementation of the terminal using the stereoscopic display technology to stereoscopically display the screen content may be understood with reference to that in the related art, which will not be described in detail here.

After the terminal performs stereoscopic display of the screen content, the screen content is presented to a user with a 3D display effect. From the user perspective, the screen content viewed by the user exhibits a clear sense of depth, meaning that the user eyes perceive a certain visual depth with respect to the screen content. In this case, the terminal may determine the visual depth of the user eyes with respect to the screen content.

When determining the visual depth of the user eyes with respect to the screen content, the terminal may determine a disparity between the left and right eyes of the user while viewing the screen content based on the stereoscopic display technology, and determine the visual depth of the user eyes with respect to the screen content based on the disparity. Of course, the visual depth may also be determined through other methods, which are not exhaustively illustrated here.

In the embodiments of the present application, the visual depth of the user eyes with respect to the screen content includes a visual depth located in front of the terminal screen and a visual depth located behind the terminal screen. For ease of distinction, the visual depth located in front of the terminal screen may be referred to as the first depth region, and the visual depth located behind the terminal screen may be referred to as the second depth region. After obtaining the visual depth of the user eyes with respect to the screen content, the terminal may further obtain the first depth region and the second depth region.

In S204, a first position of a user finger in front of the screen is detected.

In the case where the terminal stereoscopically displays the screen content, the terminal may detect the position of the user finger in front of the screen. For ease of distinction here, the position of the user finger in front of the screen may be referred to as the first position. The first position may be a relative position of the user finger with respect to the terminal screen.

When detecting the position of the user finger, the terminal may use its camera apparatus to capture images of an area in front of the screen, recognize the user finger based on the captured images, and calculate, after recognizing the user finger, a distance between the user finger and the terminal screen, thereby obtaining the first position of the user finger in front of the screen. Of course, the first position of the user finger in front of the screen may also be determined through other methods, which are not exhaustively illustrated here.

In S206, a 3D object within the first depth region is operated when the first position is within a first distance range of the screen, and a 3D object within the second depth region is operated when the first position is within a second distance range of the screen.

The terminal may divide a distance range in front of the screen (i.e., a distance range perpendicular to the terminal screen) into the first distance range and the second distance range. After detecting the first position of the user finger in front of the screen, the terminal may determine which distance range the first position falls within. If the first position is within the first distance range, the 3D object within the first depth region may be operated. If the first position is within the second distance range, the 3D object within the second depth region may be operated. Thus, the user may operate the 3D objects located both in front of and behind the screen while staying in front of the screen.

In some implementations, the first distance range and the second distance range described above may satisfy at least one of the following: the first distance range and the second distance range do not overlap with each other; the first distance range is close to the human eyes, and the second distance range is close to the screen; or a sum of the first distance range and the second distance range equals the first depth region.

For example, in some implementations, the first distance range is close to the human eyes, and the second distance range is close to the screen. In this way, the user may operate a 3D object in front of the screen (i.e., the 3D object within the first depth region) within the distance range close to the human eyes, and operate a 3D object behind the screen (i.e., the 3D object within the second depth region) within the distance range close to the screen. Thus, the user may operate the 3D object in front of the terminal screen within a close distance range and operate the 3D object behind the terminal screen within a far distance range, which aligns with operating habits of the user.

For another example, in some implementations, the first distance range and the second distance range do not overlap with each other, and the sum of the first distance range and the second distance range equals the first depth region. In this way, the user may operate 3D objects within different depths of field within different distance ranges. Furthermore, because the sum of the first distance range and the second distance range equals the first depth region, an operable distance range of the user may be limited to be within the first depth region, making it easier for the terminal to detect the position of the user finger.

In practical applications, the first distance range and the second distance range may be set according to actual requirements, such that the first distance range and the second distance range may satisfy one or more of the above three conditions, which is not limited herein.

In some implementations, operating the 3D object within the first depth region if the first position is within the first distance range may include the following steps: determining a second position within the first depth region corresponding to the first position based on a first position mapping relationship between the first distance range and the first depth region; and operating a 3D object within the first depth region corresponding to the second position.

The first position mapping relationship may be a position mapping relationship between a space within the first distance range and a space within the first depth region, and the first position mapping relationship may be predetermined. In some implementations, the first position mapping relationship may include a first mapping relationship, a second mapping relationship, and a third mapping relationship. The first mapping relationship is a position mapping relationship between the first distance range and the first depth region in a first direction. The second mapping relationship is a position mapping relationship between the first distance range and the first depth region in a second direction. The third mapping relationship is a position mapping relationship between the first distance range and the first depth region in a third direction. The first direction, the second direction, and the third direction are perpendicular to one another. The first direction, the second direction, and the third direction may be directions perpendicular to the terminal screen.

The first position of the user finger in front of the screen may be a coordinate position, which may include a first coordinate in the first direction, a second coordinate in the second direction, and a third coordinate in the third direction. Thus, determining the second position within the first depth region corresponding to the first position based on the first position mapping relationship may include the following steps: determining a fourth coordinate corresponding to the first coordinate based on the first mapping relationship; determining a fifth coordinate corresponding to the second coordinate based on the second mapping relationship; determining a sixth coordinate corresponding to the third coordinate based on the third mapping relationship; and determining a position within the first depth region corresponding to the fourth coordinate, the fifth coordinate, and the sixth coordinate as the second position corresponding to the first position.

After the second position is determined, the 3D object within the first depth region corresponding to the second position may be operated. For example, if the user performs a drag operation at the first position, the terminal may perform corresponding operations on the 3D object within the first depth region corresponding to the second position based on the drag operation of the user. This allows for the operation on the 3D object in front of the screen.

The 3D object corresponding to the second position described above may include at least one of a first object or a second object. A position of the first object within the first depth region includes the second position, and a distance between a position of the second object within the first depth region and the second position is less than or equal to a preset distance. That is, the 3D object corresponding to the second position may be a 3D object at the second position, or a 3D object at a position where the distance from the second position is less than or equal to the preset distance. The preset distance may be set according to actual requirements, which is not limited herein.

In some implementations, operating the 3D object within the first depth region if the first position is within the second distance range may include the following steps: determining a third position within the second depth region corresponding to the first position based on a second position mapping relationship between the second distance range and the second depth region; and operating a 3D object within the second depth region corresponding to the third position.

The second position mapping relationship may be a position mapping relationship between a space within the second distance range and a space within the second depth region, and the second position mapping relationship may be predetermined. In some implementations, the second position mapping relationship may include a fourth mapping relationship, a fifth mapping relationship, and a sixth mapping relationship. The fourth mapping relationship is a position mapping relationship between the second distance range and the second depth region in a first direction; the fifth mapping relationship is a position mapping relationship between the second distance range and the second depth region in a second direction; and the sixth mapping relationship is a position mapping relationship between the second distance range and the second depth region in a third direction. The first direction, the second direction, and the third direction are perpendicular to one another. The first direction, the second direction, and the third direction may be directions perpendicular to the terminal screen.

The first position of the user finger in front of the screen may be a coordinate position, which may include a first coordinate in the first direction, a second coordinate in the second direction, and a third coordinate in the third direction. Thus, determining the third position within the second depth region corresponding to the first position based on the second position mapping relationship may include the following steps: determining a seventh coordinate corresponding to the first coordinate based on the first mapping relationship; determining an eighth coordinate corresponding to the second coordinate based on the second mapping relationship; determining a ninth coordinate corresponding to the third coordinate based on the third mapping relationship; and determining a position within the second depth region corresponding to the seventh coordinate, the eighth coordinate, and the ninth coordinate as the third position corresponding to the first position.

After the third position is determined, the 3D object within the second depth region corresponding to the third position may be operated. For example, if the user performs a rotating operation at the third position, the terminal may perform corresponding operations on the 3D object within the second depth region corresponding to the third position based on the rotating operation of the user. Thus, the user may operate the 3D object behind the screen while staying in front of the screen.

The 3D object corresponding to the third position described above may include at least one of a third object or a fourth object. A position of the third object within the second depth region includes the third position, and a distance between a position of the fourth object within the second depth region and the third position is less than or equal to a preset distance. That is, the 3D object corresponding to the third position may be a 3D object at the third position, or a 3D object at a position where the distance from the third position is less than or equal to the preset distance. The preset distance may be set according to actual requirements, which is not limited herein.

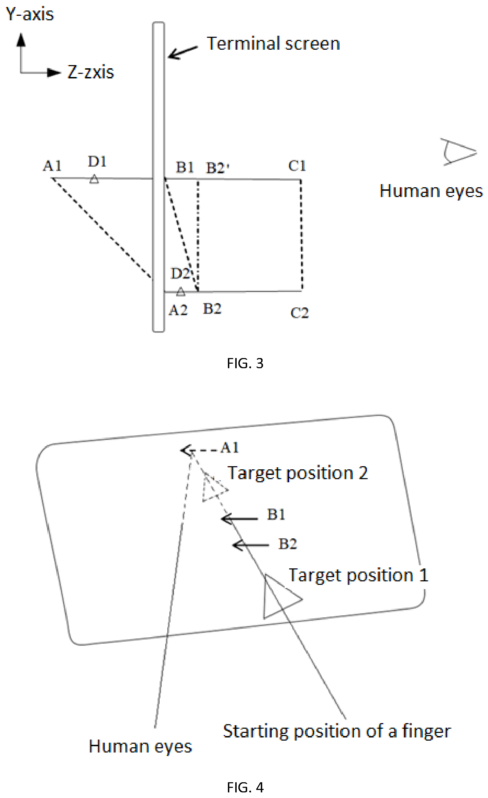

To facilitate understanding of how to determine the second position based on the first position mapping relationship and how to determine the third position based on the second position mapping relationship, the following explanation uses an implementation example shown in FIG. 3.

In FIG. 3, B1 denotes a surface of the terminal screen; A1 denotes a boundary position of a 3D object visible in the depth behind the terminal screen; C1 denotes a boundary position of a 3D object visible to the user in front of the terminal screen; A1B1 denotes the second depth region described above; and B1C1 denotes the first depth region described above. In the segment A1B1, the user may see a 3D object D1; however, because D1 is located behind the screen, when the user attempts to operate D1, the user finger cannot reach it.

Based on the technical solution provided by the embodiments of the present application, the visual depth A1C1 of the user with respect to the 3D object may be mapped to the distance range A2C2 in front of the terminal screen (here, A2C2 coincides with B1C1; different letters are used to distinguish them for the sake of clarity). The visual depth A1B1 behind the screen is mapped to the distance range A2B2 in front of the screen (i.e., the second position mapping relationship described above), and the visual depth B1C1 in front of the screen is mapped to the distance range B2C2 in front of the screen (i.e., the first position mapping relationship described above). In FIG. 3, a horizontal coordinate axis (i.e., a coordinate axis perpendicular to the terminal screen) is the Z-axis, a vertical coordinate axis is the Y-axis, and a coordinate axis perpendicular to both the Y-axis and the Z-axis is the X-axis. When mapping A1B1 to A2B2, the mapping may be performed in all three directions along the X-axis, Y-axis, and Z-axis. Similarly, when mapping B1C1 to B2C2, the mapping may also be performed in the three directions along the X-axis, Y-axis, and Z-axis.

When it is detected that the first position of the user finger is within A2C2, a target position within A1C1 corresponding to the first position may be determined based on the position mapping relationship between A1C1 and A2C2 (including the position mapping relationships between A1B1 and A2B2, and between B1C1 and B2C2; each position mapping relationship including mapping relationships along the X-axis, Y-axis, and Z-axis). For simplicity, the following explanation uses the Z-axis as an example to illustrate how to determine the target position within A1C1 corresponding to the first position of the user finger based on the mapping relationship along the Z-axis.

Assuming that the coordinate of the first position of the user finger on the Z-axis is detected to be F2(z2), and the coordinate of the position within A1C1 corresponding to F2 on the Z-axis is F1(z1), F1(z1) may be determined by Formula 1 or Formula 2 below. Formula 1: $F 1 \left(z1\right) = f 2 \left(F2\left(z2\right)\right) + β 2 , C 2 \left(z2\right) \geq F 2 \left(z2\right) \geq B 2 \left(z2\right) .$ Formula 2: $F 1 \left(z1\right) = f 1 \left(F2\left(z2\right)\right) + β 1 , where B 2 \left(z2\right) \geq F 2 \left(z2\right) \geq A 2 \left(z2\right) .$

f1 and f2 are functions, and β1 and β2 are coefficients. Formula 1 represents the mapping relationship between B2C2 and B1C1 on the Z-axis, while Formula 2 represents the mapping relationship between A2B2 and A1B1 on the Z-axis. When the position F2 of the user finger is within B2C2, F1 may be determined by Formula 1; and when the position F2 of the user finger is within A2B2, F1 may be determined by Formula 2.

For example, a certain PAD is an autostereoscopic 3D display screen with a length of 240 mm and a width of 180 mm. As shown in FIG. 3, B1 of the 3D PAD is a center point of the screen and serves as the coordinate origin. When a finger moves within B1C1, a mapped coordinate is A1C1. B2' is the projection of B2 onto B1C1. B1B2' = 20 mm, B2'C1 = 60 mm, B1C1 = 80 mm, A1B1 = 80 mm. B1C1 is a positive half of the z-axis, and B1A1 is a negative half of the z-axis. The relationship between the detection coordinate z2 of the finger and the mapped coordinate z1 of the finger is described by Formula 1 and Formula 2 described above, so Formula 1 may be expressed as: $z 1 = \left(B1B2′+B2′C1\right) / B 2 ′ C 1 * \left(z2-B1B2′\right) + 0 = \left(20+60\right) / 60 * \left(z2-20\right) + 0 ,$ where 80 ≥ z2 ≥ 20.

Based on the above formula, if z2 = 80, z1 = (20 + 60)/60 * (80 - 20) + 0 = 80.

If z2 = 60, z1 = (20+60)/60 * (60 - 20) + 0 = 53.33.

If z2 = 40, z1 = (20+60)/60 * (40 - 20) + 0 = 26.66.

If z2 = 20, z1 = (20 + 60)/60 * (20 - 20) + 0 = 0.

That is, when the user finger is 80/60/40/20 mm away from the screen, the mapped coordinates of the finger in the 3D interface are 80/53.33/26.660 mm. In this case, F1 is in front of the screen.

Formula 2 described above may be expressed as:
$z 1 = \left(A1B1/B1B2′\right) * z 2 - A 1 B 1 = 80 / 20 * z 2 + \left(-80\right) ,$ where 20 ≥ z2 ≥ 0.

Based on the above formula, if z2 = 20, z1 = 80/20 * 20 - 80 = 0.

If z2 = 10, z1 = 80/20 * 10 - 80 = -40.

If z2 = 5, z1 = 80/20 * 5 - 80 = -60.

If z2 = 0, z1 = 80/20 * 0 - 80 = -80.

That is, when the user finger is 20/10/5/0 mm away from the screen, the mapped coordinates of the finger in the 3D interface are 0/-40/-60/-80 mm. In this case, F1 is already behind the screen.

After F1 corresponding to F2 is determined, when F1 coincides with coordinates of a certain 3D object, it may be determined that the finger has touched the object. For example, if the terminal currently detects that the coordinates F2 of the finger are within A2B2, and the finger is at a position D2, defined as F2(z2_d2), the range of F1 within A1C1 corresponding to the finger coordinates is A1B1. The mapped position of D2 within A1B1 is D1, with coordinates being F1(z1_d1). In this case, there is a virtual image on the interface with coordinates Img(z3). If F1(z1_d1) matches a coordinate value of Img(z3) or an error is within a certain range, the terminal may determine that the finger has tapped the virtual image. Thus, the movement range of the finger is A2C2 in front of the screen, but the range of 3D objects that the finger may operate is A1C1 (including in front of and behind the screen).

The coordinate system described in FIG. 3 lays a foundation for implementing a 3D humancomputer interface operation shown in FIG. 4. As shown in FIG. 4, the user finger moves toward the screen from its starting position. At a target position 1, the mapped coordinates of the finger align with coordinates of an object in the 3D interface, and the terminal determines that the finger has touched the object in the 3D interface. The finger forwards toward the screen, and when the finger coordinates reach a position B2, the 3D-displayed object (the mapped coordinates of the finger) has reached a position B1. As the finger enters the range B2B1, the 3D-displayed object reaches the range B1A1. When the finger continues to forward to the position B1 (the screen), the 3D-displayed object reaches a position A1, and B1A1 is located behind the screen. Thus, operations for objects throughout the entire 3D interface space, including those in front of and behind the screen, can be achieved.

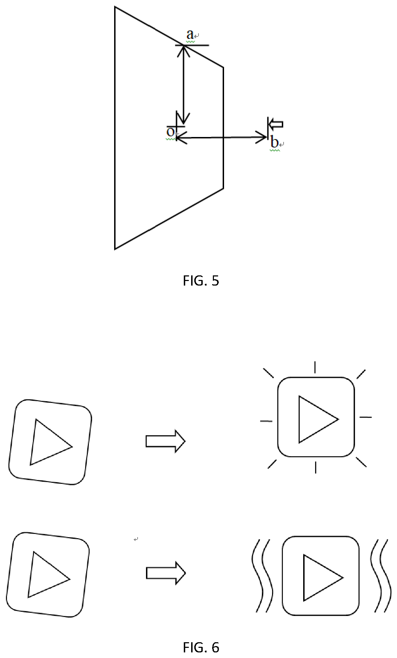

It should be noted that in the embodiment shown in FIG. 3, the touch range of the user finger is the same as the range of a display position of the 3D object (i.e., A2C2 equals B1C1). In practical applications, to maintain good user experience, the display position of the 3D object is related to the size of the display screen of the terminal. The touch range of the user finger (i.e., an operational range) may extend, in front of the screen, to a distance of up to approximately half the screen width. As shown in FIG. 5, oa represents half the screen width, and ob represents the maximum distance at which the user finger operates the virtual image, where ob is approximately equal to oa.

The values of A1B1, B1C1, and B1B2' shown in FIG. 3 may be optimized and adjusted in actual applications based on actual product requirements. Table 1 provides recommended values for several product types, which may be appropriately adjusted in actual applications.

**Table 1**

| Product type | Screen size | B1B2' | A1B1 | B1C1 |
|---|---|---|---|---|
| 3D screen of a mobile phone | 6 inches, 132.8 mm x 74.7 mm | 10 mm | 40 mm | 40 mm |
| 3D screen of a tablet computer | 12 inches, 243.8 mm x 182.9 mm | 20 mm | 80 mm | 80 mm |
| 3D screen of a computer | 27 inches, 617.5 mm x 371.2 mm | 40 mm | 160 mm | 160 mm |

In some implementations, after the 3D object corresponding to the second position or the third position is determined, visual feedback may be provided to the user regarding the 3D object. When providing the visual feedback, the process may include at least one of the following: highlighting the 3D object; performing a shaking operation on the 3D object; or changing a display color of the 3D object.

As shown in FIG. 6, the terminal may highlight or shake the 3D object, thereby improving the user experience of touching the 3D object.

It should be noted that when providing the visual feedback to the user, the timing of the feedback may be either after determining the 3D object corresponding to the second position and before operating the 3D object, or during the operation of the 3D object, which is not limited herein. If the visual feedback is provided during the operation of the 3D object, it can help the user know which 3D object is currently being operated, resulting in a better visual effect. If the visual feedback is provided after determining the 3D object corresponding to the second position and before operating the 3D object, it can help the user accurately distinguish which 3D object his/her finger is currently operating. If the 3D object is the one the user intends to operate, the user can perform the corresponding operation on it. If the 3D object is not the one the user intends to operate, the user can adjust the position of his/her finger based on the position of the 3D object to find the desired 3D object. For example, if the 3D object the user wishes to operate is visually in front of the currently highlighted 3D object, the user can move his/her finger closer to the eyes until the desired 3D object is highlighted. This can improve the accuracy of the user operations and enhance the user experience.

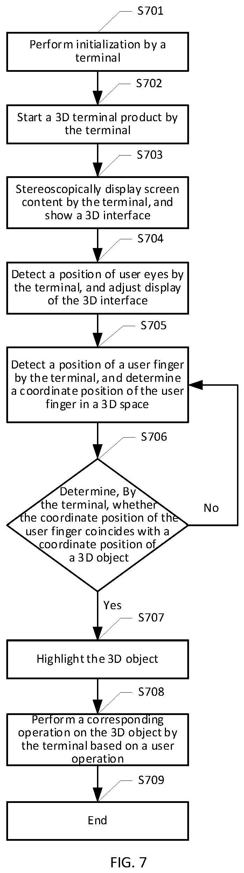

FIG. 7 is a schematic flowchart of a 3D object operation method according to another embodiment of the present application. The embodiment shown in FIG. 7 may include the following steps.

In S701, a terminal performs initialization.

In S702, the terminal starts a 3D terminal product.

In S703, the terminal stereoscopically displays screen content and shows a 3D interface.

In S704, the terminal detects a position of user eyes and adjusts display of the 3D interface.

In S705, the terminal detects a position of a user finger and determines a coordinate position of the user finger in a 3D space.

In S706, the terminal determines whether the coordinate position of the user finger coincides with a coordinate position of a 3D object.

If yes, S207 is performed; otherwise, S705 is performed.

In S707, the 3D object is highlighted.

Alternatively, the 3D object may be shaken, or a color of the 3D object may be changed.

In S708, the terminal performs a corresponding operation on the 3D object based on the user operation.

In S709, the process ends.

For the implementation of the above steps S701 to S709, reference may be made to the implementation of the corresponding steps in the embodiment shown in FIG. 2, which will not be repeated herein.

In the embodiment of the present application, in a scenario where the terminal stereoscopically displays screen content and a visual depth of human eyes with respect to the screen content includes a first depth region in front of a screen and a second depth region behind the screen, an area in front of the terminal screen may be divided into a first distance range and a second distance range. When a position of a user finger in front of the screen is within a first distance range, a 3D object within the first depth region may be operated; and when the position of the user finger in front of the screen is within a second distance range, a 3D object within the second depth region may be operated. In this way, by mapping the first depth region visually located in front of the screen and the second depth region visually located behind the screen to the first distance range and the second distance range in front of the screen, respectively, operations on 3D objects both in front of and behind the screen can be achieved.

Specific embodiments of the present application are described above. Other embodiments are within the range of the appended claims. In some cases, the actions or steps recorded in the claims may be executed in a sequence different from that of the embodiment and may still achieve desired results. In addition, the process depicted in the accompanying drawings does not necessarily require a particular order or sequential order shown to achieve the desired results. In some implementations, multitasking and parallel processing may be possible or may be advantageous.

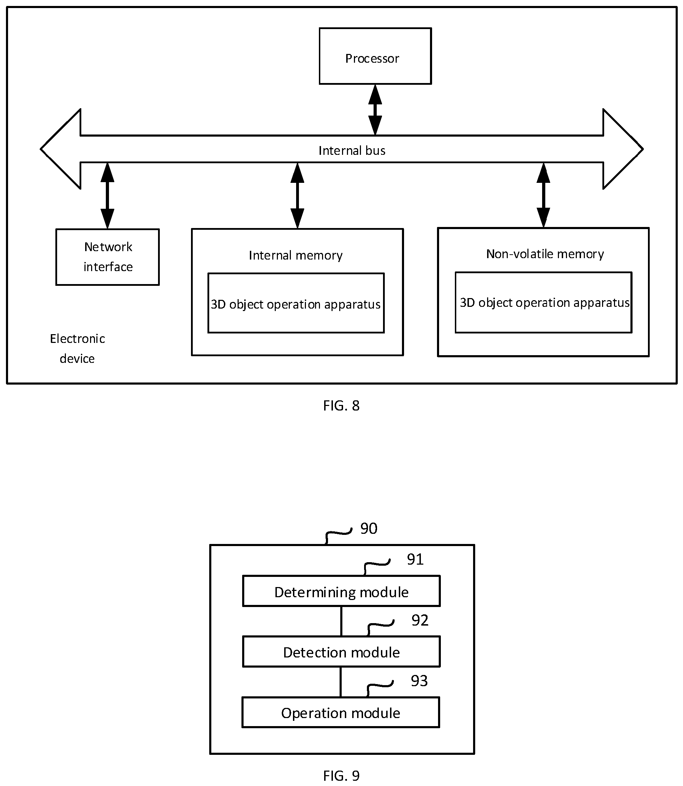

FIG. 8 is a schematic structural diagram of an electronic device according to one embodiment of the present application. Referring to FIG. 8, at a hardware level, the electronic device includes a processor, and further includes an internal bus, a network interface, and a memory. The memory may include an internal memory such as a high-speed random-access memory (RAM), or a non-volatile memory such as at least one disk memory. Of course, the electronic device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, etc. The bus may be divided into an address bus, a data bus, a control bus, and the like. For ease of illustration, only one bi-directional arrow is shown in FIG. 8, but it does not indicate only one bus or one type of bus.

The memory is configured to store a program. The program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form a 3D object operation apparatus at a logical level. The processor executes the program stored in the memory, and is configured to perform the following operations: determining, when a terminal stereoscopically displays screen content, a visual depth of human eyes with respect to the screen content, wherein the visual depth includes a first depth region and a second depth region, the first depth region is located in front of a screen, and the second depth region is located behind the screen; detecting a first position of a user finger in front of the screen; and operating a 3D object within the first depth region when the first position is within a first distance range of the screen, and operating a 3D object within the second depth region when the first position is within a second distance range of the screen.

The above method performed by the 3D object operation apparatus disclosed in the embodiment shown in FIG. 8 of the present application may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a fieldprogrammable gate array (FPGA) or other programmable logic devices, discrete gates or transistor logic devices, and discrete hardware components. The various methods, steps, and logic block diagrams disclosed in the present application may be implemented or performed. The general-purpose processor may be a microprocessor, or the processor may also be any conventional processor, etc. The steps of the method disclosed in conjunction with the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device may also perform the method shown in FIG. 2 and implement the functions of a drive access device in the embodiment shown in FIG. 2, which is not repeated here in the present application.

Of course, in addition to the software implementations, the electronic device of the present application does not exclude other implementations, such as logic devices or combinations of software and hardware, that is, an execution body of the following process flows is not limited to each logic unit, but may be hardware or logic devices.

The present application further provides a computer-readable storage medium storing one or more programs, and the one or more programs include instructions. The instructions, when executed by a portable electronic device including a plurality of applications, may cause the portable electronic device to perform the method of the embodiment shown in FIG. 2, and are configured to perform the following operations: determining, when a terminal stereoscopically displays screen content, a visual depth of human eyes with respect to the screen content, wherein the visual depth includes a first depth region and a second depth region, the first depth region is located in front of a screen, and the second depth region is located behind the screen; detecting a first position of a user finger in front of the screen; and operating a 3D object within the first depth region when the first position is within a first distance range of the screen, and operating a 3D object within the second depth region when the first position is within a second distance range of the screen.

FIG. 9 is a schematic structural diagram of a 3D object operation apparatus 90 according to one embodiment of the present application. Referring to FIG. 9, in one software implementation, the 3D object operation apparatus 90 may include: a determining module 91, a detection module 92, and an operation module 93. The determining module 91 is configured to determine, when a terminal stereoscopically displays screen content, a visual depth of human eyes with respect to the screen content, wherein the visual depth includes a first depth region and a second depth region, the first depth region is located in front of a screen, and the second depth region is located behind the screen. The detection module 92 is configured to detect a first position of a user finger in front of the screen. The operation module 93 is configured to operate a 3D object within the first depth region when the first position is within a first distance range of the screen, and operate a 3D object within the second depth region when the first position is within a second distance range of the screen.

In some implementations, the first distance range and the second distance range satisfy at least one of the following: the first distance range and the second distance range do not overlap with each other; the first distance range is close to the human eyes, and the second distance range is close to the screen; or a sum of the first distance range and the second distance range equals the first depth region.

In some implementations, the operation module 93 operating the 3D object within the first depth region if the first position is within the first distance range includes: if the first position is within the first distance range, determining a second position within the first depth region corresponding to the first position based on a first position mapping relationship between the first distance range and the first depth region; and operating a 3D object within the first depth region corresponding to the second position.

In some implementations, the operation module 93 operating the 3D object within the second depth region if the first position is within the second distance range includes: if the first position is within the second distance range, determining a third position within the second depth region corresponding to the first position based on a second position mapping relationship between the second distance range and the second depth region; and operating a 3D object within the second depth region corresponding to the third position.

In some implementations, the first position mapping relationship includes a first mapping relationship, a second mapping relationship, and a third mapping relationship. The first mapping relationship is a position mapping relationship between the first distance range and the first depth region in a first direction, the second mapping relationship is a position mapping relationship between the first distance range and the first depth region in a second direction, the third mapping relationship is a position mapping relationship between the first distance range and the first depth region in a third direction, and the first direction, the second direction, and the third direction are perpendicular to one another.

In some implementations, the first position includes a first coordinate in the first direction, a second coordinate in the second direction, and a third coordinate in the third direction. The operation module 93 determining the second position within the first depth region corresponding to the first position includes: determining a fourth coordinate corresponding to the first coordinate based on the first mapping relationship; determining a fifth coordinate corresponding to the second coordinate based on the second mapping relationship; determining a sixth coordinate corresponding to the third coordinate based on the third mapping relationship; and determining a position within the first depth region corresponding to the fourth coordinate, the fifth coordinate, and the sixth coordinate as the second position.

In some implementations, the 3D object corresponding to the second position includes at least one of a first object or a second object. A position of the first object within the first depth region includes the second position. A distance between a position of the second object within the first depth region and the second position is less than or equal to a preset distance.

In some implementations, the operation module 93 further includes at least one of the following: highlighting the 3D object; performing a shaking operation on the 3D object; or changing a display color of the 3D object.

The 3D object operation apparatus 90 provided by the present application may also perform the method shown in FIG. 2 and implement the functions of the 3D object operation apparatus 90 in the embodiment shown in FIG. 2, which is not repeated here in the present application.

The embodiments of the present application further provide a chip. The chip includes a processor and a communication interface. The communication interface is coupled to the processor. The processor is configured to execute a program or instructions to implement the various steps of the method embodiments described above, and can achieve the same technical effects, which, to avoid repetition, will not be repeated herein.

It should be understood that the chip mentioned in the embodiments of the present application may also be referred to as a system-on-chip, a system chip, a chip system, or a system on a chip, etc.

The embodiments of the present application further provide a computer program/program product. The computer program/program product is stored in a storage medium. The computer program/program product is executed by at least one processor to implement the various steps of the method embodiments described above, and can achieve the same technical effects, which, to avoid repetition, will not be repeated herein.

The embodiments of the present application further provide a processing apparatus. The processing apparatus is configured to execute the various steps of the method embodiments described above, and can achieve the same technical effects, which, to avoid repetition, will not be repeated herein.

In total, the above is merely preferred embodiments of the present application and is not intended to limit the scope of protection of the present application. Any modifications, equivalent replacements, improvements, etc. made within the spirit and principle of the present application shall fall within the scope of protection of the present application.

The system, apparatus, module or unit illustrated in the above embodiments may be embodied by a computer chip or entity, or by a product having a certain function. A typical implementation device is a computer. The computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. The information may be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or device including a series of elements not only includes those elements, but also includes other elements not clearly listed, or also includes elements inherent to this process, method, article or device. Without further restrictions, the elements defined by the sentence "including a..." do not exclude that there are other same elements in the process, method, article or device including the elements.

The various embodiments in the present application are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A 3D object operation method, comprising:
determining, when a terminal stereoscopically displays screen content, a visual depth of human eyes with respect to the screen content, wherein the visual depth comprises a first depth region and a second depth region, the first depth region is located in front of a screen, and the second depth region is located behind the screen;
detecting a first position of a user finger in front of the screen; and
operating a 3D object within the first depth region when the first position is within a first distance range of the screen, and operating a 3D object within the second depth region when the first position is within a second distance range of the screen.

2. The method according to claim 1, comprising at least one of the following:
the first distance range and the second distance range do not overlap with each other;
the first distance range is close to the human eyes, and the second distance range is close to the screen; or
a sum of the first distance range and the second distance range equals the first depth region.

3. The method according to claim 1, wherein operating the 3D object within the first depth region when the first position is within the first distance range of the screen comprises:
determining, when the first position is within the first distance range of the screen, a second position within the first depth region corresponding to the first position based on a first position mapping relationship between the first distance range and the first depth region; and
operating a 3D object within the first depth region corresponding to the second position.

4. The method according to claim 1, wherein operating the 3D object within the second depth region when the first position is within the second distance range of the screen comprises:
determining, when the first position is within the second distance range of the screen, a third position within the second depth region corresponding to the first position based on a second position mapping relationship between the second distance range and the second depth region; and
operating a 3D object within the second depth region corresponding to the third position.

5. The method according to claim 3, wherein the first position mapping relationship comprises a first mapping relationship, a second mapping relationship, and a third mapping relationship;
wherein the first mapping relationship is a position mapping relationship between the first distance range and the first depth region in a first direction, the second mapping relationship is a position mapping relationship between the first distance range and the first depth region in a second direction, the third mapping relationship is a position mapping relationship between the first distance range and the first depth region in a third direction, and the first direction, the second direction, and the third direction are perpendicular to one another.

6. The method according to claim 5, wherein the first position comprises a first coordinate in the first direction, a second coordinate in the second direction, and a third coordinate in the third direction; and determining the second position within the first depth region corresponding to the first position comprises:
determining a fourth coordinate corresponding to the first coordinate based on the first mapping relationship;
determining a fifth coordinate corresponding to the second coordinate based on the second mapping relationship;
determining a sixth coordinate corresponding to the third coordinate based on the third mapping relationship; and
determining a position within the first depth region corresponding to the fourth coordinate, the fifth coordinate, and the sixth coordinate as the second position.

7. The method according to claim 3, wherein the 3D object corresponding to the second position comprises at least one of a first object or a second object;
wherein a position of the first object within the first depth region comprises the second position; and
a distance between a position of the second object within the first depth region and the second position is less than or equal to a preset distance.

8. The method according to claim 1, further comprising at least one of the following:
highlighting the 3D object;
performing a shaking operation on the 3D object; or
changing a display color of the 3D object.

9. An electronic device, comprising:
a processor; and
a memory configured to store instructions executable by the processor;
wherein the processor is configured to execute the instructions to implement the method according to any one of claims 1 to 8.10. A computer-readable storage medium, wherein instructions in the storage medium, when executed by a processor of an electronic device, cause the electronic device to execute the method according to any one of claims 1 to 8.
